# EUROPÄISCHE PATENTSCHRIFT

(11) **EP 3 600 808 B1**
(45) Veröffentlichungstag und Bekanntmachung des Hinweises auf die Patenterteilung: **10.05.2023**
(21) Anmeldenummer: 18749396.0
(22) Anmeldetag: 09.08.2018
(51) Int. Cl.: B28B 1/00, B28C 5/12, B28C 5/40, B33Y 10/00, B33Y 30/00, B01F 27/07, B01F 27/1121, B01F 27/192, B01F 27/2123, B01F 33/501

(54) **SYSTEM ZUM APPLIZIEREN EINES BAUSTOFFES**
SYSTEM FOR APPLYING A BUILDING MATERIAL
SYSTÈME D'APPLICATION D'UN MATÉRIAU DE CONSTRUCTION

(30) Priorität: 09.08.2017 EP 17185652
(43) Veröffentlichungstag der Anmeldung: 05.02.2020
(73) Patentinhaber: Sika Technology AG, 6340 Baar (CH)
(72) Erfinder: KUHN, Patrik, 8046 Zürich (CH); BOURQUIN, Raphael, 8173 Neerach (CH); BRÜHWILER, Armin, 9606 Bütschwil (CH); LOOTENS, Didier, 8700 Küssnacht (CH)
(74) Vertreter: Sika Patent Attorneys
(86) Internationale Anmeldenummer: PCT/EP2018/071638
(87) Internationale Veröffentlichungsnummer: WO 2019/030329

(56) Entgegenhaltungen:
- CN-U- 205 086 160
- US-A- 4 039 169
- US-A- 4 778 276
- US-A- 5 656 230
- US-B1- 6 454 972

## Beschreibung

Die vorliegende Erfindung betrifft ein System zum Applizieren eines Baustoffes.

Ein bekanntes System zum Applizieren von Baustoffen ist beispielsweise in der WO 2013/064826 A1 beschrieben. Dabei wird ein fliessfähiger Baustoff über einen kranartigen Arm appliziert, um Strukturen aus dem Baustoff herzustellen. Dabei wird der Baustoff, in diesem Fall ein zementöses Material, in einem Reservoir gespeichert, und von dort über eine Düse appliziert. Das Reservoir seinerseits wird von einer Pumpe über einen Schlauch aufgefüllt. Nachteilig an einem solchen System ist es, dass kein konstanter Fluss von Baumaterial zur Verfügung steht, weil das Reservoir jeweils wieder aufgefüllt werden muss.

Aus US4039169 ist ein System zum Applizieren eines Baustoffes, laut dem Oberbegriff des Anspruchs 1 bekannt. Mehr insbesondere ist aus US4039169 ein Sandmischer mit einem bewegbaren Arm bekannt. Dabei können mehrere Mischtrommeln hintereinandergeschaltet werden.

Aus CN205086160 U ist eine Vorrichtung für Schlickerguss bekannt. Dabei kommen verschiedenste Misch und Fördervorrichtung zum Einsatz.

Aus US5656230 ist eine Vorrichtung zum Befüllen von Gussformen bekannt.

Aus US4778276 ist ein Mischer zur Bereitstellung von hydraulisch abbindenden Zusammensetzungen bekannt.

Aus WO2013/064826 A1 ist ein Verfahren zur Auslieferung von zementösem Material bekannt. Dabei wird eine vibrierende Düse eingesetzt.

Eine Aufgabe der vorliegenden Erfindung besteht darin, ein System zum Applizieren eines Baustoffes zur Verfügung zu stellen, welches erlaubt, den Baustoff kontinuierlich zu applizieren. Zudem soll das System auf einfache und kostengünstige Art und Weise an unterschiedliche Baustoffe angepasst werden können.

Diese Aufgabe wird zunächst gelöst durch ein System zum Applizieren eines Baustoffes, laut dem Anspruch 1.

In einer alternativen Ausführungsform, nicht gemäß der Erfindung, handelt es sich beim Baustoff um eine mehrkomponentige Zusammensetzung auf Kunststoffbasis. Dabei umfasst die erste Komponente typischerweise ein reaktives Polymer oder Monomer und die zweite Komponente einen Härter oder Beschleuniger für die Vernetzung oder Aushärtung dieses Polymers oder Monomers. Beispielsweise handelt es dich bei derartigen Zusammensetzungen um Epoxidharze, Polyurethane, silanfunktionelle Polymere, Silicone, Acrylate und dergleichen.

In einer ersten Ausführungsform ist das System nun an Baustoffe angepasst, welche Fasern enthalten. Dabei beträgt ein Abstand zwischen benachbarten Windungen der Förderschnecke zumindest 40% einer Länge der Fasern und/oder ein Abstand zwischen benachbarten Rührelementen der Rührwelle beträgt zumindest 40% einer Länge der Fasern.

Ein erster Vorteil von Baustoffen mit Fasern besteht darin, dass sich durch die Fasern Strukturen mit erhöhter Biegefestigkeit realisieren lassen. Dabei brechen Strukturen aus Baustoffen mit Fasern weniger schnell als Baustoffe ohne Fasern, und zudem halten Fasern bereits gebrochene Stücke des Baustoffes weiterhin zusammen, sodass die Struktur selbst bei einem Bruch noch im Wesentlichen erhalten bleibt.

Je nach eingesetzten Fasern kann ein weiterer Vorteil von Baustoffen mit Fasern darin liegen, dass die Fasern in der Lage sind, benachbarte Schichten, welche vom System übereinandergelegt werden, miteinander zu verbinden. Dadurch wird eine Stabilität der hergestellten Struktur aus Baustoff erhöht.

Um eine Blockade des Systems zu verhindern, wird nun die Fördervorrichtung an die Länge der Fasern angepasst. Dabei hat sich gezeigt, dass benachbarte Windungen der Förderschnecke zumindest 40% der Länge der Fasern betragen soll, um wirksam Blockaden durch verstopfte Fasern in der Fördervorrichtung vorzubeugen. Ein ähnlicher Effekt wurde bei den Rührelementen der Rührwelle beobachtet. Auch hier ist es vorteilhaft, benachbarte Rührelemente derart voneinander zu beabstanden, dass ein Abstand benachbarter Rührelemente zumindest 40% einer Länge der Fasern beträgt. Durch diese Massnahmen kann ein störungsfreier Einsatz des hier vorgeschlagenen Systems zum Applizieren eines Baustoffes mit Fasern gewährleistet werden.

Es wurde beobachtet, dass Rühreinrichtungen oder Fördereinrichtungen, in welchen die Fasern sich verklemmen können, zu Blockaden des Baustoffes neigen. Daher ist es ein Kerngedanke der vorliegenden Erfindung, beim Einsatz von Baustoffen mit Fasern solche Fördervorrichtungen und Rührvorrichtungen derart auszugestalten, dass die Fasern sich darin nicht verkeilen können. Dies wird insbesondere durch eine entsprechende Beabstandung von benachbarten Windungen der Förderschnecke oder durch eine entsprechende Beabstandung von benachbarten Rührelementen der Rührvorrichtung erreicht.

In einer beispielhaften Weiterbildung beträgt ein Abstand zwischen benachbarten Windungen der Förderschnecke zumindest 60% einer Länge der Fasern und/oder ein Abstand zwischen benachbarten Rührelementen der Rührwelle beträgt zumindest 60% einer Länge der Fasern.

In einer weiteren beispielhaften Weiterbildung beträgt ein Abstand zwischen benachbarten Windungen der Förderschnecke zumindest 80% einer Länge der Fasern und/oder ein Abstand zwischen benachbarten Rührelementen der Rührwelle beträgt zumindest 80% einer Länge der Fasern

In einer weiteren Ausführungsform ist das System an Baustoffe angepasst, welche keine Fasern enthalten. Dabei sind Abstände zwischen benachbarten Windungen der Förderschnecke kleiner, je näher die Windungen bei einem Auslass angeordnet sind, und/oder ein Abstand zwischen benachbarten Rührelementen der Rührwelle beträgt von 5 bis 50 mm, bevorzugt von 7 bis 40 mm, besonders bevorzugt von 10 bis 13 mm.

Es wurde beobachtet, dass mit einer Fördervorrichtung, bei welcher die Abstände zwischen den Windungen gegen den Auslass hin kleiner werden, ein konsistenter und konstanter Ausfluss von Baumaterial gewährleistet werden kann, welcher sich besonders gut eignet zur Herstellung von Strukturen aus Baumaterial. Durch das Verkleinern der Abstände zwischen den Windungen gegen den Auslass hin wird der Baustoff durch die Fördervorrichtung mit einem gewissen Druck gefördert. Es hat sich gezeigt, dass durch eine solche Ausgestaltung der Fördervorrichtung ein sehr konstanter Ausfluss von Baumaterial erzielt werden kann.

Weiterhin wurde beobachtet, dass das Anordnen von Rührelementen in besagten Abständen zu einem homogenen Baustoffgemisch führt. Zudem wurde beobachtet, dass das Vorsehen von in der Regel mehr Rührelementen im Vergleich zur Anwendung für Baustoffe mit Fasern ein höherer Energieeintrag vom Mischer in den Baustoff zur Folge hat, was sich vorteilhaft auf die Aufschliessung der Komponenten des Baustoffes und auf die Reaktion der ersten und der zweiten Komponente des Baustoffes untereinander auswirkt. Ein höherer Energieeintrag vom Mischer in den Baustoff hat zudem den Vorteil, dass der Baustoff auf eine höhere Temperatur gebracht wird, was wiederum eine raschere Erstarrung des Baustoffes nach dessen Austritt aus dem System zur Folge hat.

Ein Kerngedanke der vorliegenden Erfindung ist es, dass für Anwendungen ohne Fasern die Fördervorrichtung und die Rührvorrichtung dahingehend optimiert werden können, dass der Baustoff mit einem gewissen Druck aus dem System hinausgefördert wird und/oder dass die Komponenten des Baustoffes mit einem optimierten Energieeintrag des Mischers miteinander vermischt werden. Da in diesem Ausführungsbeispiel keine Fasern enthalten sind, ist das gesamte System weniger anfällig auf Blockaden.

In einem weiteren Ausführungsbeispiel wird das System angepasst auf einen Durchmesser der Körner einer Gesteinskörnung der ersten Komponente des Baustoffes. Es wurde beobachtet, dass insbesondere ein Abstand zwischen den Rührelementen der Rührwelle und einer Innenwand der Mischkammer hinsichtlich eines Durchmessers der Körner der Gesteinskörnung optimiert werden kann. Ähnliches wurde beobachtet für einen Abstand zwischen Aussenflächen der Windungen der Fördereinrichtung und der Innenwand der Mischkammer. Es hat sich gezeigt, dass diese Abstände zwischen den Rührelementen der Rühreinrichtung bzw. den Aussenflächen der Windungen der Fördervorrichtung und der Mischkammer zumindest gleich gross gewählt werden sollen wie ein Durchmesser der Körner der Gesteinskörnung.

In einer weiteren Ausführungsform ist daher ein Abstand zwischen Enden von Rührelementen der Rührwelle und/oder Aussenflächen der Windungen der Fördereinrichtung und einer Innenwand der Mischkammer zumindest gleich gross wie ein Durchmesser der Körner der Gesteinskörnung.

Ein Kerngedanke der vorliegenden Erfindung hinsichtlich der Anpassung des Systems im Hinblick auf die Grösse der Gesteinskörnung liegt darin, dass die Abstände zwischen den rotierenden Elementen und der Innenwand der Mischkammer angepasst werden können an die Grösse der Gesteinskörnung. Es hat sich insbesondere gezeigt, dass Gesteinskörner des Baustoffes verklemmen können zwischen den rotierenden Elementen und der Trommel der Mischkammer. Solche Verklemmungen führen einerseits zu höherem Verschleiss der entsprechenden Elemente und können andererseits das System blockieren. Daher ist es vorteilhaft, die genannten Abstände zumindest gleich gross zu wählen wie der Durchmesser der Gesteinskörnung des Baustoffes.

Als Durchmesser der Körner der Gesteinskörnung wird im Rahmen dieser Erfindung ein mittlerer grösster Durchmesser der Gesteinskörnung des Baustoffes verstanden.

Insgesamt liegt der Erfindung die Erkenntnis zugrunde, dass die rotierenden Bestandteile der Misch- bzw. Fördereinrichtung des Systems zum Applizieren des Baustoffes hinsichtlich der Zusammensetzung des Baustoffes optimiert werden können. Insbesondere die Abstände zwischen den Windungen der Fördervorrichtung, die Abstände zwischen den Rührelementen der Rührvorrichtung und die Abstände zwischens rotierenden Elementen und der Innenwand der Mischkammer können an die Bestandteile des Baustoffes angepasst werden. Eine solche Anpassung hat den Vorteil, dass ein konstanter Betrieb des Systems gewährleistet werden kann, ohne dass Blockaden des Baustoffes im System auftreten, wobei gleichzeitig eine Mischung der Komponenten sowie ein Austrag durch die Fördervorrichtung optimiert werden können.

In einer beispielhaften Ausführungsform hat eine erste Windung der Förderschnecke einen kleineren Durchmesser als nachfolgende Windungen.

Das Vorsehen einer solchen kleineren ersten Windung der Förderschnecke bietet den Vorteil, dass dadurch der Baustoff von der Fördervorrichtung besser erfasst werden kann, weil ein Eintritt des Baustoffes von ausserhalb der Fördervorrichtung in den Zwischenbereich zwischen der ersten und der zweiten Windung einfacher vonstattengehen kann.

In einer beispielhaften Ausführungsform hat die erste Windung der Förderschnecke eine Aussenfläche, welche durch einen Winkel α abgeschrägt ist, so dass eine erste Kante niedriger ist als eine zweite Kante.

Insbesondere ist die erste Kante weiter von der zweiten Windung beabstandet als die zweite Kante.

In einer bevorzugten Weiterbildung beträgt der Winkel α zwischen 10° und 50°, besonders bevorzugt zwischen 15° und 45°, besonders bevorzugt zwischen 20° und 40°.

Das Vorsehen einer derart abgeschrägten Aussenfläche der ersten Windung hat den Vorteil, dass das Baumaterial schonender von der Fördervorrichtung erfasst werden kann, was wiederum zu weniger Blockaden des Baumaterials in der Fördervorrichtung führt.

In einer beispielhaften Ausführungsform weisen die Rührelemente Aussengewinde auf und die Rührwelle weist Vertiefungen mit Innengewinden auf, so dass die Rührelemente durch Drehung in die Rührwelle einsetzbar und entnehmbar sind.

Ein solcher Mechanismus zum Einsetzen bzw. Entnehmen der Rührelemente von der Rührwelle hat den Vorteil, dass der Mischer auf einfache Art und Weise an den verwendeten Baustoff angepasst werden kann. Insbesondere werden für Baustoffe mit Fasern weniger Rührelemente verwendet als für Baustoffe ohne Fasern.

Weiterhin können durch einen solchen Mechanismus die Rührelemente als Verschleissteile auf einfache Art und Weise ausgetauscht werden.

In einer beispielhaften Ausführungsform werden für Baustoffe mit Fasern im Vergleich zur Anzahl Rührelemente für Baustoffe ohne Fasern zwischen 30 und 70%, bevorzugt zwischen 35 und 65%, besonders bevorzugt zwischen 40 und 60% der Rührelemente eingesetzt.

In einer beispielhaften Weiterbildung sind die Rührelemente als Stifte ausgebildet.

Es hat sich gezeigt, dass mit Stiften die Komponenten des Baumaterials effizient gemischt werden können und dass gleichzeitig eine Verstopfung des Baustoffes im Mischer, insbesondere bei Baustoffen mit Fasern, verhindert werden kann.

In einer beispielhaften Ausführungsform enthält der Baustoff Fasern, und Abstände zwischen benachbarten Windungen sind im Wesentlichen gleich gross.

In einer alternativen Ausführungsform enthält der Baustoff Fasern, und Abstände zwischen den Windungen der Fördereinrichtung sind umso kleiner, je näher die Windungen an einem Auslass angeordnet sind, wobei der kleinste Abstand zwischen benachbarten Windungen zumindest 40% einer Länge der Fasern hat.

In einer beispielhaften Ausführungsform hat der Baustoff Fasern und die Fördervorrichtung hat zwei bis vier Windungen.

In einer beispielhaften Ausführungsform ist ein Querschnitt einer Begrenzungsfläche der Fördervorrichtung im Wesentlichen geradlinig oder im Wesentlichen S-förmig ausgebildet.

Das Ausgestalten des Querschnitts der Begrenzungsfläche kann dazu verwendet werden, einen Druck zu beeinflussen, mit welchem das Baumaterial aus der Fördervorrichtung gefördert wird. Dabei spielt neben dem Querschnitt der Begrenzungsfläche auch die Beabstandung der Windungen eine Rolle. Insgesamt kann die Fördervorrichtung derart optimiert werden, dass einerseits ein gewünschter Druck aufgebaut werden kann, und andererseits eine Blockade durch den Baustoff verhindert werden kann, insbesondere bei Baustoffen, welche Fasern enthalten.

In einer beispielhaften Ausführungsform enthält der Baustoff Fasern, wobei die Fasern eine Länge von 5 bis 20 mm, bevorzugt von 7 bis 17 mm, besonders bevorzugt von 10 bis 15 mm haben, und wobei die Fasern eine Breite von 5 bis 2000 µm haben, bevorzugt von 20 bis 1000 µm, besonders bevorzugt von 30 bis 500 µm, und wobei die Fasern eine Höhe von 5 bis 200 µm haben, bevorzugt von 10 bis 150 µm, besonders bevorzugt von 30 bis 100 µm.

Es hat sich gezeigt, dass derart dimensionierte Fasern besonders geeignet sind, um eine Biegefestigkeit einer aus dem Baustoff hergestellten Struktur zu erhöhen, und andererseits durch den Mischer geführt werden können, ohne diesen zu blockieren.

In einer beispielhaften Ausführungsform enthält der Baustoff Fasern, wobei die Fasern zumindest teilweise aus Metall oder aus Glas oder aus Karbon oder aus Kunststoff oder aus Naturfasern bestehen.

In einer bevorzugten Weiterbildung bestehen die Fasern zumindest teilweise aus Stahl, insbesondere aus Edelstahl.

In einer alternativen bevorzugten Weiterbildung bestehen die Fasern zumindest teilweise aus PVA.

Bevorzugte Fasern sind ausgewählt aus der Gruppe bestehend aus Metallfasern, insbesondere Stahlfasern oder amorphe Metallfasern, mineralischen Fasern, insbesondere Glasfasern, Basaltfasern oder Wollastonit-Fasern, natürlichen Fasern, insbesondere Cellulosefasern, Hanffasern, Leinenfasern oder Seidenfasern, und Kunststofffasern, insbesondere Kohlenstofffasern, Fasern aus Polypropylen, Polyethylen, Polyvinylalkohol, Polyamid, Polyaramid, Polyacrylnitril oder Polyester, und Mischungen davon, wobei Metallfasern, Kohlenstofffasern, Fasern aus Polypropylen oder Fasern aus Polyvinylalkohol, oder Mischungen davon, speziell bevorzugt sind.

In einer beispielhaften Ausführungsform enthält der Baustoff Fasern, wobei die Fasern flexibel ausgebildet sind. Insbesondere ist dabei eine Höhe der Fasern in Abhängigkeit des Materials der Fasern derart gewählt, dass die Fasern biegbar sind.

In einer beispielhaften Ausführungsform enthält der Baustoff Fasern, wobei 1 l Baustoff zwischen 1'000 bis 1'000'000'000, bevorzugt zwischen 5'000 und 500'000'000, besonders bevorzugt zwischen 10'000 und 100'000'000 Fasern enthält.

Je nach Material und Grösse der Fasern kann eine sehr unterschiedliche Anzahl an Fasern pro Liter Baustoff eingesetzt werden. Beispielsweise können mehrere hundert Millionen sehr kleiner Karbonfasern eingesetzt werden, oder aber nur einige tausend viel grössere Stahlfasern.

Es hat sich gezeigt, dass eine solche Anzahl von Fasern besonders geeignet ist, um einerseits eine mit dem Baustoff hergestellte Struktur wirksam mechanisch zu verstärken, und andererseits eine Neigung des Mischers, zu verstopfen, verhindert wird.

In einer beispielhaften Ausführungsform enthält der Baustoff keine Fasern, wobei die Fördereinrichtung zwei bis zehn, bevorzugt drei bis acht, besonders bevorzugt vier bis sechs Windungen hat.

Es hat sich in Versuchen gezeigt, dass eine Fördereinrichtung mit zwei bis zehn Windungen besonders geeignet ist, um Baustoffe ohne Fasern mit dem gewünschten Druck zu fördern.

In einer beispielhaften Ausführungsform ist die Fördervorrichtung zumindest teilweise aus Kunststoff aufgebaut. In einer vorteilhaften Weiterbildung ist die Fördervorrichtung zumindest teilweise aus Nylon aufgebaut.

In einer weiteren bevorzugten Weiterbildung ist die Fördervorrichtung durch ein 3D-Druckverfahren hergestellt.

In einer alternativen Ausführungsform ist die Fördervorrichtung zumindest teilweise aus Metall, beispielsweise Stahl, aufgebaut.

In einer beispielhaften Ausführungsform ist die Fördervorrichtung auf der Rührwelle angeordnet und mit dieser wirkverbunden, wobei die Fördervorrichtung von der Rührwelle abziehbar ausgestaltet ist.

In einer beispielhaften Ausführungsform ist die Fördervorrichtung auf der Rührwelle aufgesteckt und durch ein Verriegelungselement an der Rührwelle gesichert.

Die eingangs gestellte Aufgabe wird weiterhin gelöst durch ein Verfahren zum Herstellen einer Struktur aus einem Baustoff, wobei das Verfahren umfasst: Bereitstellen einer ersten Komponente des Baustoffes, umfassend einen pumpbaren Beton, welcher eine Gesteinskörnung enthält; Bereitstellen einer zweiten Komponente des Baustoffes, umfassend ein Betonzusatzmittel, welches einen Erstarrungsbeschleuniger enthält; Mischen der ersten Komponente und der zweiten Komponente in einem Mischer, wobei der Mischer einen Antrieb und eine Mischkammer mit einer Rührwelle und einer Fördervorrichtung umfasst, wobei die Fördervorrichtung als Förderschnecke mit Windungen ausgebildet ist; Bewegen einer Bewegungsvorrichtung zur Veränderung eines Applikationsortes in einem Raum; Fördern des Baustoffes durch das Förderelement; Applizieren des Baustoffes; und Anpassen des Mischers an den Baustoff.

Dabei wird der Mischer in der gleichen Art und Weise an den jeweiligen Baustoff angepasst, wie dies bereits für das System zum Applizieren des Baustoffes beschrieben wurde.

In einer beispielhaften Ausführungsform ist die Bewegungsvorrichtung in der Art eines 3D-Druckers bewegbar ausgebildet, so dass durch das System bzw. mit dem Verfahren verschiedenste Strukturen aus dem Baustoff aufbaubar sind.

Solche Systeme in der Art von 3D-Druckern bieten den Vorteil, dass dadurch ganze Strukturen aus Baumaterial, wie beispielsweise Gebäudewände oder Ähnliches, hergestellt werden können. Dabei sind keine Schalungen notwendig, und daher ist auch eine Formgebung der Struktur wesentlich freier wählbar, als dies mit herkömmlichen Systemen bzw. Verfahren der Fall ist.

In einer beispielhaften Ausführungsform wird der Mischer beim Mischen mit einer Drehzahl von mehr als 500 Umdrehungen pro Minute betrieben, bevorzugt mit einer Drehzahl von mehr als 650 Umdrehungen pro Minute, besonders bevorzugt mit einer Drehzahl von mehr als 800 Umdrehungen pro Minute, besonders bevorzugt mit einer Drehzahl von mehr als 1000 Umdrehungen pro Minute.

Das Betreiben des Mischers mit hohen Drehzahlen bietet den Vorteil, dass dadurch Mischgüter mit hoher oder schnell ansteigender Viskosität (wie beispielsweise Beton mit Erstarrungsbeschleuniger) möglichst effizient und rasch durchmischt und anschliessend aus dem Mischer gefördert werden können, ohne dass dabei der Mischer blockiert und in seiner Funktion versagt.

Zudem bieten solche hohen Drehzahlen den Vorteil, dass dadurch nicht nur eine gute Durchmischung der Materialien erzielt werden kann, sondern es können dadurch auch Strukturen im Mischgut aufgebrochen werden.

In Versuchen wurde pumpbarer Beton mit Erstarrungsbeschleuniger mit Drehzahlen zwischen 200 und 2000 Umdrehungen pro Minute miteinander vermischt. Dabei wurde festgestellt, dass beim Mischen mit Drehzahlen unter 500 Umdrehungen pro Minute kein genügend homogenes bzw. glattes Gemisch erzielt wird, so dass sich der pumpbare Beton oder der pumpbare Beschleuniger ungenügend miteinander vermischen. Dies führte zu einem schwer kontrollierbaren Erstarrungsverhalten, da das nicht genügend homogene Gemisch Bereiche mit überdurchschnittlich viel Erstarrungsbeschleuniger und Bereiche mit entsprechend zu wenig Erstarrungsbeschleuniger aufwies. Dies kann weiterhin zu Blockaden im Mischer führen und/oder zu Mängeln im applizierten Gemisch, wie beispielsweise Bereiche mit ungenügender Festigkeit nach einer bestimmten Zeit nach dem Verlassen des Mischers. In den Versuchen hat sich zudem gezeigt, dass durch höhere Drehzahlen folgende Effekte auftreten: Erstens werden der Beton und der Beschleuniger besser durchmischt, was ein kontrollierbareres Erstarrungsverhalten zur Folge hat. Zweitens wird der Beton stärker aufgebrochen, so dass der Beschleuniger auf einer grösseren Oberfläche des Betons einwirken kann, was eine schnellere und besser kontrollierbare Reaktion zwischen Beton und Beschleuniger zur Folge hat. Drittens wurde mehr Energie in das Gemisch eingetragen, was eine stärkere Erwärmung von Beton und Beschleuniger zur Folge hat, was wiederum den Erstarrungsprozess beschleunigt.

Die oben beschriebenen Effekte wurden in steigendem Masse bis zu einer Drehzahl von 2000 Umdrehungen pro Minute beobachtet.

In einer vorteilhaften Ausführungsform wird beim Applizieren des Baustoffes der Baustoff in mehrere zumindest teilweise übereinanderliegende Lagen appliziert.

In einer vorteilhaften Weiterbildung wird beim Applizieren eine bestehende Lage erst dann mit einer neuen Lage des Baustoffes überlagert, wenn die bestehende Lage eine genügend hohe Festigkeit aufweist, um eine ursprüngliche Form beizubehalten.

In einer vorteilhaften Weiterbildung werden beim Applizieren kontinuierlich zumindest teilweise sich überlagernde Lagen des Baustoffes aufgebaut, so dass die Struktur aus Baumaterial in der Art eines 3D-Druckes aufgebaut werden kann.

Einzelheiten und Vorteile der Erfindung werden im Folgenden anhand von Ausführungsbeispielen und mit Bezug auf schematische Zeichnungen beschrieben. Es zeigen:
- Fig. 1: eine schematische Darstellung eines beispielhaften Systems zum Applizieren eines Baustoffes;
- Fig. 2: eine schematische Darstellung eines beispielhaften Mischers;
- Fig. 3: eine beispielhafte Darstellung einer Mischkammer;
- Fig. 4: eine beispielhafte Darstellung einer Fördervorrichtung;
- Fig. 5a und 5b: eine beispielhafte Darstellung einer Fördervorrichtung für Baustoffe ohne Fasern;
- Fig. 6a und 6b: eine beispielhafte Darstellung einer Fördervorrichtung für Baustoffe mit Fasern;
- Fig. 7: eine schematische Darstellung einer beispielhaften Faser; und
- Fig. 8: eine schematische Darstellung eines Kornes einer Gesteinskörnung des Baustoffes.

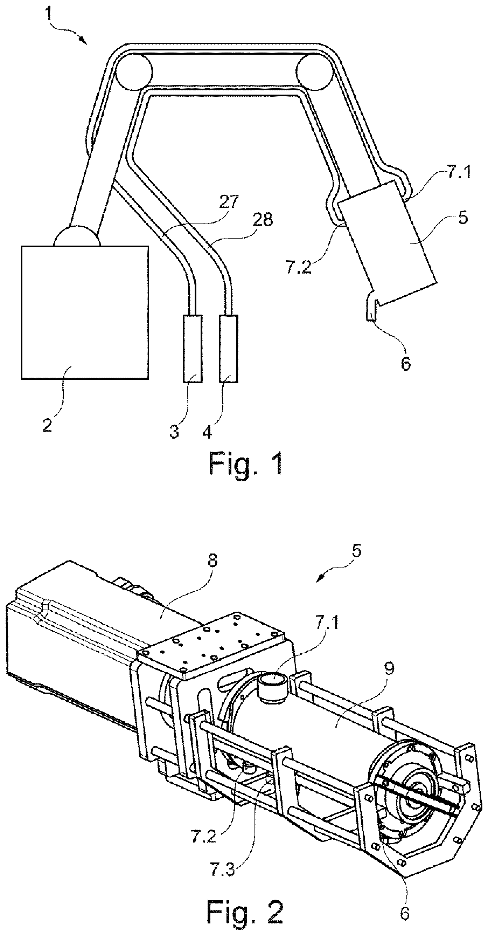

In Fig. 1 ist schematisch ein System zum Applizieren eines Baustoffes dargestellt. Das System 1 umfasst dabei eine Bewegungsvorrichtung 2, welche in diesem Ausführungsbeispiel als Vorrichtung mit einem kranartigen Arm ausgebildet ist. Ein Mischer 5 ist dabei an einem Kopf der Bewegungsvorrichtung 2 angeordnet. Eine erste Komponente 3 und eine zweite Komponente 4 sind jeweils dem Mischer 5 über einen ersten Schlauch 27 und einen zweiten Schlauch 28 zuführbar. Dabei hat der Mischer 5 einen ersten Einlass 7.1 und einen zweiten Einlass 7.2, an welchen die erste Komponente 3 und die zweite Komponente 4 dem Mischer 5 zugeführt werden können. Der Mischer 5 hat weiterhin einen Auslass 6, über welchen der Baustoff appliziert werden kann.

In diesem Ausführungsbeispiel wird der Mischer 5 jeweils durch die Bewegungsvorrichtung 2 an einen Ort bewegt, an welchem der Baustoff appliziert werden soll.

In Fig. 2 ist der Mischer 5 aus Fig. 1 detaillierter dargestellt. Der Mischer 5 hat einen Antrieb 8 und eine Mischkammer 9. Die Mischkammer 9 hat dabei einen ersten Einlass 7.1, einen zweiten Einlass 7.2 und einen dritten Einlass 7.3. Zudem hat die Mischkammer 9 einen Auslass 6. Dabei kann beispielsweise der erste Einlass 7.1 für die Zuführung der ersten Komponente verwendet werden, der zweite Einlass 7.2 kann für die Zuführung von Reinigungsflüssigkeit in die Mischkammer 9 verwendet werden, und der dritte Einlass 7.3 kann für die Zuführung der zweiten Komponente des Baustoffes in die Mischkammer 9 verwendet werden. Am Auslass 6 kann beispielsweise eine Düse (nicht dargestellt) angeordnet werden, um den Baustoff in einem gewünschten Querschnitt zu applizieren.

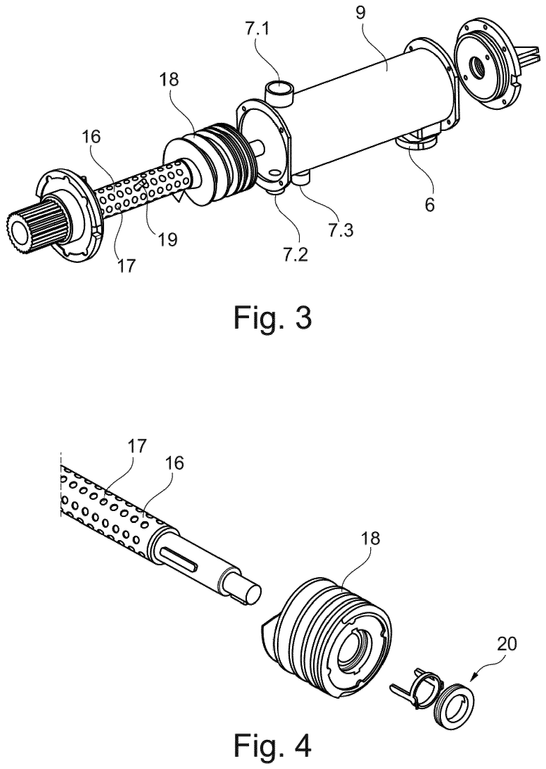

In Fig. 3 sind beispielhaft verschiedene Bestandteile der Mischkammer 9 dargestellt. Dabei ist ersichtlich, dass in der Mischkammer 9 eine Rührwelle 16 angeordnet ist, an welcher einerseits Rührelemente 19 und ein Förderelement 18 angeordnet ist. In diesem Ausführungsbeispiel sind die Rührelemente 19 auf einem ersten Abschnitt der Rührwelle 16 angeordnet, und die Fördervorrichtung 18 ist auf einem zweiten Abschnitt der Rührwelle 16 angeordnet. Dabei ist der erste Abschnitt der Rührwelle mit den Rührelementen 19 im Bereich der Einlässe 7.1, 7.2, 7.3 angeordnet, und die Fördervorrichtung 18 ist im Bereich des Auslasses 6 angeordnet.

In Fig. 4 ist eine beispielhafte Fördervorrichtung 18 dargestellt. Dabei ist ersichtlich, dass die Fördervorrichtung 18 auf die Rührwelle 16 aufsteckbar ausgestaltet werden kann. In diesem Ausführungsbeispiel ist zudem ein Verriegelungselement 20 vorgesehen, um die Fördervorrichtung 18 auf der Rührwelle 16 zu sichern.

Die Rührwelle 16 hat in den gezeigten Ausführungsbeispielen Vertiefungen 17, in welchen die Rührelemente 19 angebracht werden können. Dies kann beispielsweise durch eine Verschraubung der Rührelemente auf der Rührwelle geschehen, wobei die Rührelemente ein Aussengewinde und die Vertiefungen ein Innengewinde haben. In dem gezeigten Ausführungsbeispiel sind die Rührelemente 19 als Stifte ausgebildet. Es versteht sich von selbst, dass mehr Rührelemente 19 auf der Rührwelle 16 angeordnet werden können, als dies auf den Figuren dargestellt ist.

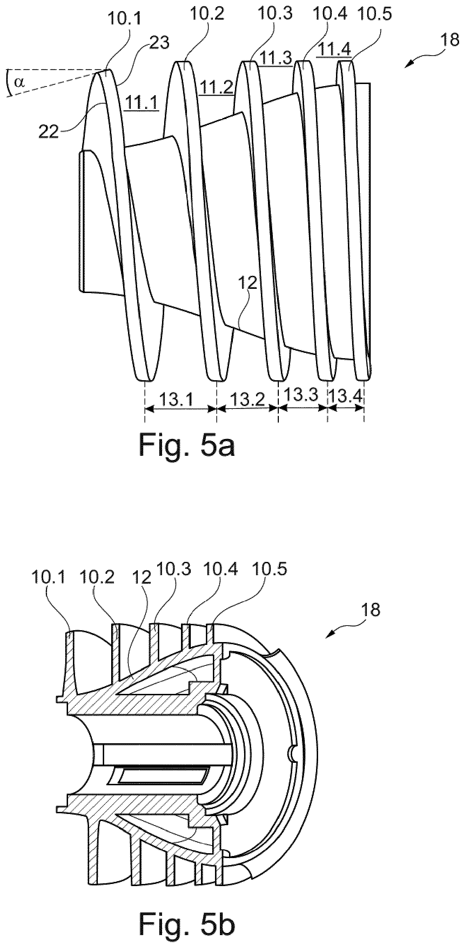

In den Fig. 5a und 5b ist ein beispielhaftes Förderelement 18 dargestellt, welches sich insbesondere für Baustoffe ohne Fasern eignet. Die Fördervorrichtung 18 ist in diesem Ausführungsbeispiel als Förderschnecke ausgestaltet. Dabei hat die Förderschnecke mehrere Windungen 10.1, 10.2, 10.3, 10.4, 10.5. Zwischen den Windungen 10.1, 10.2, 10.3, 10.4, 10.5 ist jeweils ein Förderquerschnitt 11.1, 11.2, 11.3, 11.4 dargestellt. In Fig. 5a ist dabei ersichtlich, dass die Förderquerschnitte 11.1, 11.2, 11.3, 11.4 kleiner werden, je näher sie an einem Auslass des Mischers (nicht dargestellt) angeordnet sind. Die Förderquerschnitte 11.1, 11.2, 11.3, 11.4 werden einerseits durch die Gestaltung der Begrenzungsfläche 12 und andererseits durch das Mass der Abstände 13.1, 13.2, 13.3, 13.4 zwischen benachbarten Windungen 10.1, 10.2, 10.3, 10.4, 10.5 bestimmt.

In dieser beispielhaften Ausführungsform ist die erste Windung 10.1, welche am weitesten entfernt ist von einem Auslass des Mischers (nicht dargestellt), mit einem kleineren Durchmesser ausgebildet als die nachfolgenden Windungen 10.2, 10.3, 10.4, 10.5. Zudem hat die erste Windung 10.1 eine Aussenfläche, welche durch einen Winkel α abgeschrägt ausgestaltet ist. Dabei ist eine erste Kante 22 niedriger ausgebildet als eine zweite Kante 23, wobei die erste Kante 22 weiter vom Auslass des Mischers (nicht dargestellt) beabstandet ist als die zweite Kante 23.

In Fig. 5b ist dieselbe Fördervorrichtung wie in Fig. 5a abgebildet, jedoch in einer perspektivischen Darstellung und als Schnittzeichnung. In Fig. 5b ist zudem ersichtlich, dass die Fördervorrichtung 18 auf der Rührwelle 16 aufgesteckt und gesichert werden kann (vgl. dazu Fig. 4).

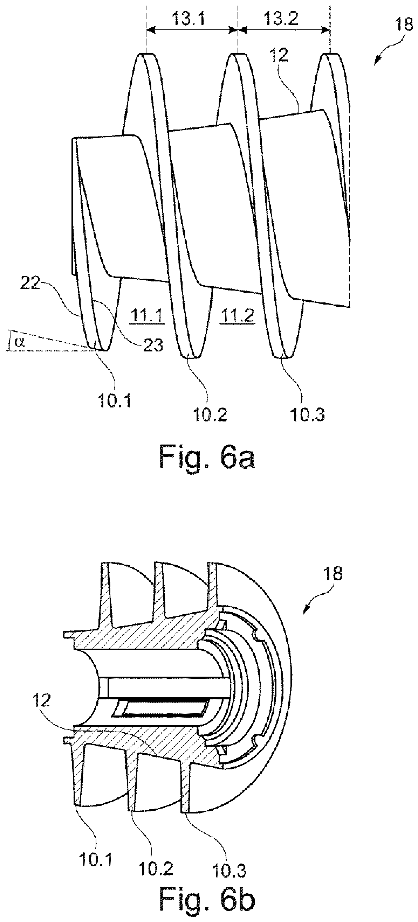

In den Fig. 6a und 6b ist eine weitere beispielhafte Fördervorrichtung 18 dargestellt, welche sich insbesondere für Baustoffe mit Fasern eignet. In diesem Ausführungsbeispiel ist die erste Windung 10.1 wiederum abgeschrägt und kleiner als die weiteren Windungen 10.2, 10.3. Im Unterschied zur Fördervorrichtung in den Fig. 5a und 5b sind die Abstände 13.1, 13.2 zwischen den Windungen 10.1, 10.2, 10.3 in diesem Ausführungsbeispiel gleich gross. Insbesondere sind die Abstände 13.1, 13.2 so gewählt, dass sie zumindest 80% einer Länge der Fasern des Baustoffes betragen.

Die Förderquerschnitte 11.1, 11.2 verkleinern sich in diesem Ausführungsbeispiel ebenfalls von Windung zu Windung, jedoch weniger stark als im Ausführungsbeispiel gemäss den Fig. 5a und 5b. In diesem Ausführungsbeispiel hat zudem die Begrenzungsfläche 12 der Fördervorrichtung 18 im Wesentlichen einen geradlinigen Querschnitt.

In Fig. 6b ist dieselbe Fördervorrichtung 18 wie in Fig. 6a dargestellt, jedoch in perspektivischer Darstellung und als Schnitt. Wiederum ist dabei ersichtlich, wie die Fördervorrichtung 18 auf der Rührwelle aufgesteckt und gesichert werden kann (vgl. dazu Fig. 4).

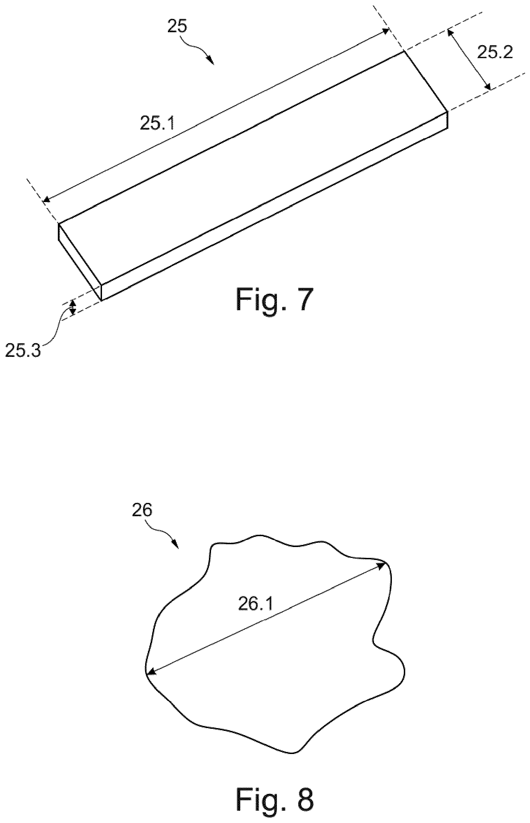

In Fig. 7 ist eine beispielhafte Faser 25 dargestellt. Die Faser 25 hat dabei eine Länge 25.1, eine Breite 25.2 und eine Höhe 25.3. Die Höhe 25.3 der Faser 25 ist insbesondere so gewählt, dass in Abstimmung mit dem Fasermaterial die Faser 25 flexibel ausgebildet ist.

In Fig. 8 ist ein beispielhaftes Korn 26 der Gesteinskörnung des Baustoffes dargestellt. Das Korn 26 kann, wie hier dargestellt, eine unregelmässig gestaltete Oberfläche aufweisen. Ein Durchmesser 26.1 entspricht einem grössten Durchmesser des Kornes 26.

### Bezugszeichenliste

- 1: System
- 2: Bewegungsvorrichtung
- 3: erste Komponente
- 4: zweite Komponente
- 5: Mischer
- 6: Auslass
- 7: Einlass
- 7.1: erster Einlass
- 7.2: zweiter Einlass
- 7.3: dritter Einlass
- 8: Antrieb
- 9: Mischkammer
- 10: Windung
- 10.1: erste Windung
- 10.2: zweite Windung
- 10.3: dritte Windung
- 10.4: vierte Windung
- 10.5: fünfte Windung
- 11: Förderquerschnitt
- 11.1: erster Förderquerschnitt
- 11.2: zweiter Förderquerschnitt
- 11.3: dritter Förderquerschnitt
- 11.4: vierter Förderquerschnitt
- 12: Begrenzungsfläche
- 13: Abstand zwischen benachbarten Windungen
- 13.1: erster Abstand
- 13.2: zweiter Abstand
- 13.3: dritter Abstand
- 13.4: vierter Abstand
- 16: Rührwelle
- 17: Vertiefung
- 18: Förderelement
- 19: Rührelement
- 20: Verriegelungselement
- 22: erste Kante
- 23: zweite Kante
- 25: Faser
- 26: Korn
- 27: erster Schlauch
- 28: zweiter Schlauch

## Patentansprüche

1. System (1) zum Applizieren eines Baustoffes, das System (1) umfassend:
Eine Bewegungsvorrichtung (2) zur Veränderung eines Applikationsortes in einem Raum;
Eine erste Komponente (3) des Baustoffes;
Eine zweite Komponente (4) des Baustoffes; und
Einen Mischer (5) zur Vermischung der ersten Komponente (3) und der zweiten Komponente (4), wobei der Mischer (5) einen Antrieb (8) und eine Mischkammer (9) mit einer Rührwelle (16) und einer Fördervorrichtung (18) umfasst, wobei die Fördervorrichtung (18) als Förderschnecke mit Windungen (10, 10.1, 10.2, 10.3, 10.4, 10.5) ausgebildet ist;
- Wobei der Baustoff Fasern (25) enthält und:
o ein Abstand (13.1, 13.2) zwischen benachbarten Windungen (10.1, 10.2, 10.3) der Förderschnecke zumindest 40% einer Länge der Fasern (25) beträgt, und/oder
o ein Abstand zwischen benachbarten Rührelementen (19) der Rührwelle (16) zumindest 40% einer Läge der Fasern (25) beträgt; oder
- Wobei der Baustoff keine Fasern (25) enthält und:
o Abstände (13.1, 13.2, 13.3, 13.4) zwischen benachbarten Windungen (10.1, 10.2, 10.3, 10.4, 10.5) der Förderschnecke kleiner sind, je näher die Windungen (10.1, 10.2, 10.3, 10.4, 10.5) bei einem Auslass (6) angeordnet sind, und/oder
o ein Abstand zwischen benachbarten Rührelementen (19) der Rührwelle (16) von 5 bis 50 mm beträgt; oder
- Wobei die erste Komponente eine Gesteinskörnung enthält, und wobei ein Abstand zwischen Enden von Rührelementen (19) der Rührwelle (16) und einer Innenwand der Mischkammer (9) zumindest gleich gross ist wie ein Durchmesser der Körner (26) der Gesteinskörnung;
**dadurch gekennzeichnet, dass** die erste Komponente (3) des Baustoffes einen pumpbaren Beton umfasst, und wobei die zweite Komponente (4) des Baustoffes ein Betonzusatzmittel, welches einen Erstarrungsbeschleuniger enthält, umfasst.

2. System (1) nach Anspruch 1, wobei eine erste Windung (10.1) der Fördervorrichtung (18) einen kleineren Durchmesser hat als nachfolgende Windungen (10.2, 10.3, 10.4, 10.5).

3. System (1) nach Anspruch 2, wobei die erste Windung (10.1) der Fördervorrichtung (18) eine Aussenfläche hat, welche durch einen Winkel (α) abgeschrägt ist, so dass eine erste Kante (22) niedriger ist als eine zweite Kante (23), wobei die erste Kante (22) weiter entfernt ist von einem Auslass (6) des Mischers als die zweite Kante (23).

4. System (1) nach einem der vorhergehenden Ansprüche, wobei die Rührelemente (19) Aussengewinde aufweisen und wobei die Rührwelle (16) Vertiefungen (17) mit Innengewinden aufweist, so dass die Rührelemente (19) durch Drehung von der Rührwelle (16) einsetzbar und entnehmbar sind.

5. System (1) nach Anspruch 4, wobei die Rührelemente (19) der Rührwelle (16) als Stifte ausgebildet sind.

6. System (1) nach einem der vorhergehenden Ansprüche, wobei der Baustoff Fasern (25) enthält und wobei Abstände (13.1, 13.2) zwischen benachbarten Windungen (10.1, 10.2, 10.3) im Wesentlichen gleich gross sind.

7. System (1) nach einem der vorhergehenden Ansprüche, wobei der Baustoff Fasern (25) enthält und wobei die Fördervorrichtung (18) zwei bis vier Windungen (10.1, 10.2, 10.3, 10.4, 10.5) hat.

8. System (1) nach einem der vorhergehenden Ansprüche, wobei der Baustoff Fasern (25) enthält und wobei ein Querschnitt einer Begrenzungsfläche (12) der Fördervorrichtung (18) im Wesentlichen geradlinig oder im Wesentlichen S-förmig ausgebildet ist.

9. System (1) nach einem der vorhergehenden Ansprüche, wobei der Baustoff Fasern (25) enthält und wobei die Fasern (25) eine Länge von 5 bis 20 mm haben, und/oder eine Breite von 5 bis 2000 µm haben, und/oder eine Höhe von 5 bis 100 µm haben.

10. System (1) nach einem der vorhergehenden Ansprüche, wobei der Baustoff Fasern (25) enthält, wobei die Fasern (25) zumindest teilweise aus Metall oder aus Kunststoff oder aus Glas oder aus Karbon bestehen, und/oder
wobei die Fasern (25) flexibel sind.

11. System (1) nach einem der vorhergehenden Ansprüche, wobei der Baustoff Fasern (25) enthält, wobei 1 l Baustoff zwischen 1'000 und 1'000'000'000 Fasern (25) hat.

12. System (1) nach einem der Ansprüche 1 bis 5, wobei der Baustoff keine Fasern (25) enthält, und wobei die Fördervorrichtung (18) zwei bis zehn Windungen (10.1, 10.2, 10.3, 10.4, 10.5) hat.

## Claims

1. System (1) for applying a building material, the system (1) comprising:
a movement device (2) for changing an application site in a space;
a first component (3) of the building material;
a second component (4) of the building material; and
a mixer (5) for mixing the first component (3) and the second component (4), wherein the mixer (5) comprises a drive (8) and a mixing chamber (9) with an agitating shaft (16) and a conveying device (18), wherein the conveying device (18) is configured as a screw conveyor with windings (10, 10.1, 10.2, 10.3, 10.4, 10.5);
- wherein the building material contains fibres (25), and:
o a distance (13.1, 13.2) between adjacent windings (10.1, 10.2, 10.3) of the screw conveyor is at least 40% of a length of the fibres (25), and/or
o a distance between adjacent agitating elements (19) of the agitating shaft (16) is at least 40% of a length of the fibres (25); or
- wherein the building material does not contain fibres (25), and:
∘ distances (13.1, 13.2, 13.3, 13.4) between adjacent windings (10.1, 10.2, 10.3, 10.4, 10.5) of the screw conveyor are smaller, the closer the windings (10.1, 10.2, 10.3, 10.4, 10.5) are arranged to an outlet (6), and/or
∘ a distance between adjacent agitating elements (19) of the agitating shaft (16) is between 5 and 50 mm; or
- wherein the first component contains an aggregate, and wherein a distance between ends of agitating elements (19) of the agitating shaft (16) and an inner wall of the mixing chamber (9) is at least as large as a diameter of the grains (26) of the aggregate;
**characterized in that** the first component (3) of the building material is a pumpable concrete, and wherein the second component (4) of the building material comprises a concrete additive which contains an accelerating admixture.

2. System (1) according to Claim 1, wherein a first winding (10.1) of the conveying device (18) has a smaller diameter than subsequent windings (10.2, 10.3, 10.4, 10.5).

3. System (1) according to Claim 2, wherein the first winding (10.1) of the conveying device (18) has an outer face which is chamfered by an angle (α) such that a first edge (22) is lower than a second edge (23), wherein the first edge (22) is further away from an outlet (6) of the mixer than the second edge (23).

4. System (1) according to any of the preceding claims, wherein the agitating elements (19) have external threads and wherein the agitating shaft (16) has depressions (17) with internal threads, such that the agitating elements (19) can be inserted in and removed from the agitating shaft (16) by rotation.

5. System (1) according to Claim 4, wherein the agitating elements (19) of the agitating shaft (16) are configured as pins.

6. System (1) according to any of the preceding claims, wherein the building material contains fibres (25), and wherein distances (13.1, 13.2) between adjacent windings (10.1, 10.2, 10.3) are substantially equal.

7. System (1) according to any of the preceding claims, wherein the building material contains fibres (25), and wherein the conveying device (18) has two to four windings (10.1, 10.2, 10.3, 10.4, 10.5).

8. System (1) according to any of the preceding claims, wherein the building material contains fibres (25), and wherein a cross section of a delimiting surface (12) of the conveying device (18) is formed so as to be substantially rectilinear or substantially S-shaped.

9. System (1) according to any of the preceding claims, wherein the building material contains fibres (25) and wherein the fibres (25) have a length of 5 to 20 mm, and/or have a width of 5 to 2000 um, and/or have a height of 5 to 100 µm.

10. System (1) according to any of the preceding claims, wherein the building material contains fibres (25), wherein the fibres (25) at least partially consist of metal or plastic or glass or carbon, and/or wherein the fibres (25) are flexible.

11. System (1) according to any of the preceding claims, wherein the building material contains fibres (25), wherein 1 1 of building material has between 1,000 and 1,000,000,000 fibres (25).

12. System (1) according to any of Claims 1 to 5, wherein the building material does not contain fibres (25), and wherein the conveying device (18) has two to ten windings (10.1, 10.2, 10.3, 10.4, 10.5).

## Revendications

1. Système (1) pour l'application d'un matériau de construction, le système (1) comprenant :
un dispositif de déplacement (2) pour modifier un emplacement d'application dans une pièce ;
un premier composant (3) du matériau de construction ;
un deuxième composant (4) du matériau de construction ; et
un mélangeur (5) pour le mélange du premier composant (3) et du deuxième composant (4), le mélangeur (5) comprenant un entraînement (8) et une chambre de mélange (9) avec un arbre d'agitation (16) et un dispositif de transport (18), le dispositif de transport (18) étant configuré sous forme de vis sans fin de transport avec des spires (10, 10.1, 10.2, 10.3, 10.4, 10.5) ;
- dans lequel le matériau de construction contient des fibres (25) et :
- une distance (13.1, 13.2) entre des spires voisines (10.1, 10.2, 10.3) de la vis sans fin de transport est d'au moins 40 % d'une longueur des fibres (25), et/ou
- une distance entre des éléments d'agitation voisins (19) de l'arbre d'agitation (16) est d'au moins 40 % d'une longueur des fibres (25) ; ou
- dans lequel le matériau de construction ne contient pas de fibres (25) et :
- les distances (13.1, 13.2, 13.3, 13.4) entre des spires voisines (10.1, 10.2, 10.3, 10.4, 10.5) de la vis sans fin de transport sont d'autant plus petites que les spires (10.1, 10.2, 10.3, 10.4, 10.5) sont agencées près d'une sortie (6), et/ou
- une distance entre des éléments d'agitation voisins (19) de l'arbre d'agitation (16) est de 5 à 50 mm ; ou
- dans lequel le premier composant contient un granulat, et dans lequel une distance entre des extrémités des éléments d'agitation (19) de l'arbre d'agitation (16) et une paroi intérieure de la chambre de mélange (9) est au moins égale à un diamètre des grains (26) du granulat ;
**caractérisé en ce que** le premier composant (3) du matériau de construction comprend un béton pompable, et dans lequel le deuxième composant (4) du matériau de construction contient un additif de béton contenant un accélérateur de prise.

2. Système (1) selon la revendication 1, dans lequel une première spire (10.1) du dispositif de transport (18) a un diamètre plus petit que des spires suivantes (10.2, 10.3, 10.4, 10.5).

3. Système (1) selon revendication 2, dans lequel la première spire (10.1) du dispositif de transport (18) a une surface extérieure qui est inclinée selon un angle (α) de telle sorte qu'un premier bord (22) est plus bas qu'un deuxième bord (23), dans lequel le premier bord (22) est plus éloigné d'une sortie (6) du mélangeur que le deuxième bord (23).

4. Système (1) selon l'une quelconque des revendications précédentes, dans lequel les éléments d'agitation (19) présentent des filetages extérieurs et dans lequel l'arbre d'agitation (16) présente des creux (17) avec des filetages intérieurs, de telle sorte que les éléments d'agitation (19) peuvent être insérés et retirés (16) par rotation de l'arbre d'agitation.

5. Système (1) selon la revendication 4, dans lequel les éléments d'agitation (19) de l'arbre d'agitation (16) sont configurés sous forme de broches.

6. Système (1) selon l'une quelconque des revendications précédentes, dans lequel le matériau de construction contient des fibres (25) et dans lequel les distances (13.1, 13.2) entre des spires voisines (10.1, 10.2, 10.3) sont essentiellement égales.

7. Système (1) selon l'une quelconque des revendications précédentes, dans lequel le matériau de construction contient des fibres (25) et dans lequel le dispositif de transport (18) a deux à quatre spires (10.1, 10.2, 10.3, 10.4, 10.5).

8. Système (1) selon l'une quelconque des revendications précédentes, dans lequel le matériau de construction contient des fibres (25) et dans lequel une section transversale d'une surface de délimitation (12) du dispositif de transport (18) est configurée sous forme essentiellement rectiligne ou essentiellement en forme de S.

9. Système (1) selon l'une quelconque des revendications précédentes, dans lequel le matériau de construction contient des fibres (25) et dans lequel les fibres (25) ont une longueur de 5 à 20 mm, et/ou une largeur de 5 à 2 000 um, et/ou une hauteur de 5 à 100 µm.

10. Système (1) selon l'une quelconque des revendications précédentes, dans lequel le matériau de construction contient des fibres (25), dans lequel les fibres (25) sont au moins partiellement constituées de métal ou de matière plastique ou de verre ou de carbone, et/ou dans lequel les fibres (25) sont flexibles.

11. Système (1) selon l'une quelconque des revendications précédentes, dans lequel le matériau de construction contient des fibres (25), dans lequel 1 1 de matériau de construction a entre 1 000 et 1 000 000 000 fibres (25).

12. Système (1) selon l'une quelconque des revendications 1 à 5, dans lequel le matériau de construction ne contient pas de fibres (25), et dans lequel le dispositif de transport (18) a deux à dix spires (10.1, 10.2, 10.3, 10.4, 10.5).
